(19) Europäisches Patentamt
European Patent Office
Office européen des brevets

(11) **EP 1 876 781 B1**

(12) **EUROPEAN PATENT SPECIFICATION**

(45) Date of publication and mention
of the grant of the patent:
**10.09.2008 Bulletin 2008/37**

(51) Int Cl.:
**H04L 25/02** *(2006.01)*    **H04L 27/26** *(2006.01)*

(21) Application number: **06300752.0**

(22) Date of filing: **04.07.2006**

(54) **Method and system for estimating symbol timing in OFDMA systems**

Verfahren und Vorrichtung zur Schätzung des Symboltaktes in OFDMA-Systemen.

Procédé et appareil pour estimation de l'horloge de symboles dans des systèmes AMRFO

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**09.01.2008 Bulletin 2008/02**

(73) Proprietor: **Alcatel Lucent**
**75008 Paris (FR)**

(72) Inventor: **Richter, Robert**
**12105 Berlin (DE)**

(74) Representative: **Wetzel, Emmanuelle**
**Alcatel Lucent**
**Intellectual Property & Standards**
**70430 Stuttgart (DE)**

(56) References cited:
**EP-A- 1 267 535**    **WO-A-03/001760**

- BAOGUO YANG ET AL: "Timing Recovery for OFDM Transmission" IEEE JOURNAL ON SELECTED AREAS IN COMMUNICATIONS, IEEE SERVICE CENTER, vol. 18, no. 11, November 2000 (2000-11), XP011055250 PISCATAWAY, US ISSN: 0733-8716
- LEE D ET AL: "A NEW SYMBOL TIMING RECOVERY ALGORITHM FOR OFDM SYSTEMS" IEEE TRANSACTIONS ON CONSUMER ELECTRONICS, vol. 43, no. 3, August 1997 (1997-08), pages 767-774, XP000742560 NY, US ISSN: 0098-3063
- NOGAMI H ET AL: "A FREQUENCY AND TIMING PERIOD ACQUISITION TECHNIQUE FOR OFDM SYSTEMS" IEEE INTERNATIONAL SYMPOSIUM ON PERSONAL, INDOOR AND MOBILE RADIO COMMUNICATIONS, vol. 3, September 1995 (1995-09), pages 1010-1015, XP002914136
- JUNGJU KIM ET AL: "An Efficient Timing Synchronization Method for OFDMA System" IEEE/ACES INTERNATIONAL CONFERENCE ON WIRELESS COMMUNICATIONS AND APPLIED COMPUTATIONAL ELECTROMAGNETICS, 2005, 3 April 2005 (2005-04-03), pages 1018-1021, XP010826536 NJ, USA ISBN: 0-7803-9068-7

**Description**

**Background of the Invention**

The invention relates to Orthogonal Frequency Division Multiple Access (OFDMA) burst transmission systems using multiple non-adjacent groups of sub carriers per OFDMA subscriber station (SS) with pilot signals within each sub carrier group for assisting time synchronization and channel estimation. More precisely the invention relates to a method for detecting symbol timing in such an OFDMA system.

In particular the uplink of the currently evolving WiMAX (Worldwide Interoperability for Microwave Access) systems according to the IEEE 802.16e standard or the Chinese WIBRO (Wireless Broadband) standard are such systems.

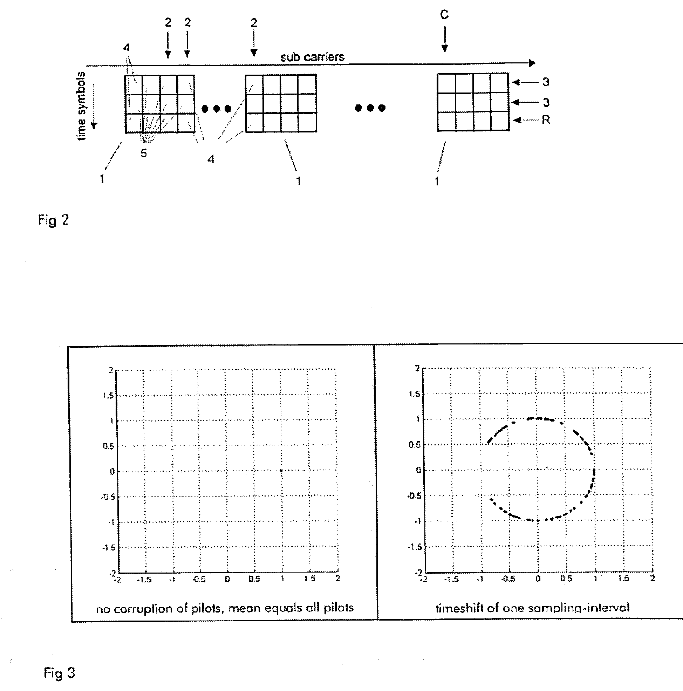

IEEE 802.16e defines an OFDMA burst transmission physical layer using multiple non-adjacent groups 1 of sub carriers 2 per SS with pilot sub carriers 4 within each sub carrier group 1 (Fig. 2). Those non-adjacent groups are also called tiles. Six tiles 1 form a sub-channel, wherein each sub-channel is assigned to a SS. Also multiple sub-channels can be assigned to the same SS. Each tile 1 comprises four adjacent sub carriers 2 and three time symbols 3. Each tile 1 comprises four pilot sub carriers 4. The remaining sub carriers 2 in each sub carrier group 1 are data sub carriers 5.

The sub carriers 2, i.e. the data sub carriers 5 and the pilot sub carriers 4, which form a sub-channel, are spread over the frequency band, wherein sub carriers 2 assigned to a tile 1 always are adjacent sub carriers 2. In Fig. 2 the sub carriers 2 having different frequencies and belonging to the same time symbol 3 form a row R, wherein succeeding sub carriers 2, i.e. sub carriers 2 belonging to different time symbols 3, having the same frequency form a column C.

For signal transmission at the transmitter side of the SS, all sub carriers for one row R in one time symbol are transformed into time domain using e.g. an inverse Fast Fourier Transformation (IFFT).

To achieve demodulation of the incoming time domain OFDMA signal comprising a plurality of sub-channels, at receiver side a Fast Fourier Transformation (FFT) has to be performed. To achieve maximum performance at FFT output, perfect symbol timing, i.e. a perfect synchronization between beginning and ending of the sampling per time symbol at the receiver side and the beginning and ending of the time symbols in the received OFDMA signal has to be performed by a timing estimation and timing tracking algorithm or procedure.

The FFT is performed in order to obtain the values magnitude and phase of the received, analog symbols of each sub carrier independently from the frequency of the particular sub carrier. The values magnitude and phase - in the following just called values - can be displayed as real and imaginary part in the complex number plane in a way that the magnitude is displayed as the distance from the origin of the complex number plane and the phase is displayed as the angle versus positive real axis. In the following it is not differentiated between the sub carriers and the analog symbols of the sub carriers, i.e. the values of the sub carriers, if not mentioned explicit by using the term value.

OFDMA sub carriers usually have a cyclic extension, the so called cyclic prefix (CP), which allows FFT and demodulation even in case of non-ideal symbol timing adjustment. In IEEE 802.16e standard, this CP length is defined to be 1/8 of the OFDMA time symbol. This means that the number of samples per time symbol is larger than the FFT window size. Due to this, the signal can be correctly transformed and demodulated using FFT, as long as the symbol timing error is less than 1/8 of the time symbol duration. Symbol timing errors within the CP lead to a phase rotation of the resulting values of the sub carriers. Symbol timing errors larger than CP cause signal distortion due to inter-carrier interference. Ideal symbol timing is achieved, if the FFT uses samples between the end of the CP and the end of the time symbol.

Since in non line of sight propagation conditions so called multi-path effects occur due to echo and the like causing different transmission lines between transmitter and receiver showing different delay and different attenuation, it is not straightforward to detect the optimal position of the FFT window in relation to the time symbol under this conditions. In this case symbol timing has to be derived from the received data sub carriers and pilot sub carriers available in the OFDMA signal.

As each SS has an individual timing error, e.g. due to tolerances in individual ranging procedure, a precise correction of the time shift at the Base Station (BS) is mandatory. As a BS receives signals from several SSs that are all supposed to be within a timing tolerance, an exact synchronization of the BS with the SSs is not possible. Therefore the BS will have to correct the data sub carriers of the individual SSs on a per SS basis. Also in case of mobile SS the symbol timing variation has to be monitored, to allow correction of the SS symbol timing, i.e. the individual ranging, before the allowed tolerances are violated.

Thereby the problem arises, that actually no solution is known to detect and/or to track symbol timing in OFDMA systems, particularly to correct symbol timing in OFDMA systems with multi-path effects.

Furthermore it has to be considered that evolving WiMAX systems and systems according to IEEE802.16 need high performance at reasonable complexity.

In EP 1267535 A1 a method for detecting symbol timing in an OFDM system is described which uses two consecutive pilot sub carriers of a symbol.

In the document "Timing Recovery for OFDM Transmission", Booguo Yang et al, IEEE Journal on Selected Areas in Communications, vol 18, no. 11, November 2000, a scheme for performing timing recovery is presented. In this scheme timing recovery includes symbol synchronization and sampling clock synchronization. Symbol synchronization is improved using a path time delay estimation method and sampling clock synchronization is done using a delay-locked loop (DLL).

In the document "A New Symbol Timing Recovery Algorithm for OFDM Systems", Lee, D. et al, IEEE Transactions on Consumer Electronics, vol. 43, no. 3, August 1997, a symbol timing recovery algorithm is presented which does not use pilot signals.

**Object of the invention:**

An object of the invention is to find a remedy for this problem.

**Disclosure of the invention and its advantages:**

The object of the invention is met by the method for detecting symbol timing in an OFDMA system according to claim 1 or 2, the OFDMA base station according to claim 14, and the computer program product according to claim 16.

The correction is performed per sub-channel, and preferably per SS if more than one sub-channel is assigned to a SS, i.e. all pilot sub carriers belonging to the same sub-channel and preferably all pilot sub carriers belonging to the same SS are considered when determining the time shift showing the maximum absolute value of the mean pilot. The absolute value of the mean pilot sub carrier is calculated among the time shifted pilot sub carriers of the sub carrier groups of each sub-channel for each individual time shift of the set of time shifts. The set of time shifts comprises different time shifts in constant intervals. The size of the intervals directly influences the exactness of the determined time shift showing the maximum absolute value of the mean corrected pilot. Selecting small intervals improves this exactness, but increases complexity, wherein selecting large intervals reduces complexity, but also reduces exactness of the determined maximum. The time shift showing the maximum absolute value of the corrected mean pilot is applied to the data sub carriers of the SS. Applying this time shift on the sub carriers, particularly on the data sub carriers within this sub-channel, preferably takes place by calculating individual correction factors for all sub carriers, wherein the individual correction factors are directly depending on the sub carrier frequency and the determined time shift showing the maximum absolute value.

Said method according to the invention has the advantage over the stote of the art, that it provides a higher performance in presence of multi-effects. This is because according to the invention an average time shift for the whole sub-channel or for all sub-channels belonging to the same SS is determined. Such an average time shift also averages sub carrier specific multi-path effects such as frequency depending delay and attenuation.

In general it is also thinkable to perform a method according to the invention by calculating channel estimates per pilot sub carrier and by determining a mean pilot channel estimate, instead of regarding the pilot sub carriers, i.e. their values, and determining a mean pilot. In this case, the method according to the invention is performed as follows:

calculation of channel estimates for all pilot sub carriers of a SS.
Correcting the received pilot sub carrier channel estimates with a set of different time shifts
Calculating a mean pilot channel estimate out of said corrected pilot sub carrier channel estimates.
Calculating the absolute value of said mean pilot for each time shift.
Selecting the time shift showing the maximum absolute value for the mean pilot channel estimate.
Applying said time shift showing the maximum absolute value to the received data sub carriers on said sub-channel.

Thereby a channel estimate of a pilot sub carrier is the quotient of the received values of the sub carrier to the known value of the pilot sub carrier at the transmitter. Doing so is of particular interest, if a modulation of the pilot sub carriers with randomly selected values '+1' and '-1' is performed according to IEEE802.16e standard. By regarding the channel estimates, the modulation is filtered. Again, if more than one sub-channel is assigned to a SS, all pilot sub carrier estimates are considered for determining the mean pilot channel estimate.

In a preferred embodiment of said invention, correcting the received pilot sub carriers or the calculated pilot sub carrier channel estimates with a set of different time shifts, calculating the absolute value of the mean corrected pilot carriers or the mean calculated pilot sub carrier channel estimates for each time shift, selecting the time shift showing the maximum absolute value, and applying said time shift to the received data sub carriers is performed per SS instead of per channel. Thereby all sub-channels assigned to a particular subscriber station are considered, instead of an individual consideration per sub-channel. Doing so, it is achieved to use the pilot carriers of all sub-channels belonging to the same SS to derive the actual symbol timing. This increases reliability of the determined time shift.

In another preferred embodiment of said invention, the set of different time shifts used to correct the pilot signals lies within an expected tolerance. The tolerance within an OFDMA system is defined as a fraction of the duration of a time symbol, e.g. 1/64 of the time symbol duration. Regarding this example, the set of time shifts comprises time shifts from $\pm$ 1/64 of the symbol duration applied on the receiving time of the symbols to determine the actual symbol timing. Doing so, time shifts outside the tolerance are not considered.

In a particularly preferred embodiment of said invention, a FFT is performed in order to transfer and to treat the pilot sub carriers and preferably also the data sub carriers in the complex number plane before calculating the absolute value of the mean corrected pilot for each time shift.

In another preferred embodiment of said invention, applying said time shift to the received data sub carriers is either done by shifting the FFT window to the appropriate position given by the selected time shift showing the maximum absolute value, or the FFT output is corrected with the selected time shift showing the maximum absolute value.

In a preferred embodiment of said invention, first of all the modulation of the pilot sub carriers is removed, e.g. by multiplying the pilot sub carriers with their nominal values +1 or -1, with which they are modulated e.g. in the IEEE802.16e standard, before the mean pilot is determined and before the pilot sub carriers are corrected with the set of different time shifts. According to the IEEE802.16e standard, the pilot sub carriers, originally having the values (1,0i) in the complex number plane, i.e. a magnitude of 1 and a phase of 0°, are randomly multiplied with $\pm$ 1. Multiplying the received pilot sub carriers with ($\pm$1,0i) according to the known random sequence ensures a positive magnitude without changing the phase of the received pilot sub carriers. Applying this procedure, the resulting values of the pilot sub carriers are identical with the pilot sub carrier channel estimates. Therefore, instead of the pilot sub carrier channel estimates, also the values of the received pilot sub carriers can be used if a modulation according to IEEE 802.16e standard is performed on the transmitter side.

In an additional preferred embodiment of said invention, a fine correction for the symbol timing is performed in order to correct deviations caused by sample inaccuracy in the order of a fraction of the sampling interval.

In another additional preferred embodiment of said invention, the fine correction is obtained using the slope of the linear regression of the phase angles of the pilot sub carriers vs. the sub carrier frequency, after the correction with the time shift showing the maximum absolute value and having only sample accuracy is performed in a previous step.

In a particularly preferred embodiment of said invention, to fine correct, the coarse time corrected pilot sub carriers are rotated around the origin with the inverse phase angle of the mean pilot, or the mean pilot channel estimate if the channel estimates are considered, in order to have their mean value on the positive real axis before determining the slope of the linear regression of the phase angles vs. the sub carrier frequency, Thereby the mean value is the statistical average value of all pilot sub carriers present doing mean or so called average calculation. The mean value is identical to the mean pilot. Doing so, the advantage is achieved that common lookup tables and tools can be used to determine the slope of the phase signal vs. the sub carrier frequency without the risk of an ambiguity at 180°.

In a preferred embodiment of said invention, to fine correct, the slope of the imaginary parts of the pilot sub carriers vs. frequency is used instead of the slope of the phase angles.

In another preferred embodiment of said invention, fine correction takes place by determining and applying said fine correction after determining and applying the time shift showing the maximum absolute value to the received data sub carriers. Applying said fine correction preferably takes place by either shifting the FFT window to the appropriate position given by the selected time shift showing the maximum absolute value plus the determined fine correction, or by correcting the FFT output with the selected time shift showing the maximum absolute value plus the determined fine correction.

In a particularly preferred embodiment of said invention, during transmission, the symbol timing is monitored and tracked on the receiver side in order to detect, if the symbol timing exceeds a given tolerance, and in case of exceeding a given tolerance, symbol timing, i.e. ranging is adjusted on the transmitter side. During transmission, the symbol timing has to be monitored and tracked on the receiver side in order to adjust the ranging on the transmitter side, if given tolerances are exceeded. So the actual symbol timing has to be detected with an accuracy higher than the adjustment steps and the given tolerance for operation. Thereby the term ranging as defined e.g. in the IEEE 802.16e standard describes the adaptation of symbol timing to the actual distance between a BS and a SS. If one of both moves, ranging has to be adapted continuously or step by step in intervals.

Further advantageous embodiments of the present invention are part of the dependent claims.

**Brief description of the drawings, with**

Fig. 1 showing a schematic flowchart of a method according to the invention,
Fig. 2 showing a schematic view of the structure of an OFDMA sub-channel,
Fig. 3 showing a diagram showing schematically the locations of pilot sub carriers and mean pilot in the complex plane in presence of multi-path effects,
Fig. 4 showing a diagram showing the absolute value of the mean pilot for different time shifts, and
Fig. 5 showing a schematic view of the structure of a group of sub carriers, i.e. of a tile.

**Detailed description of the drawings:**

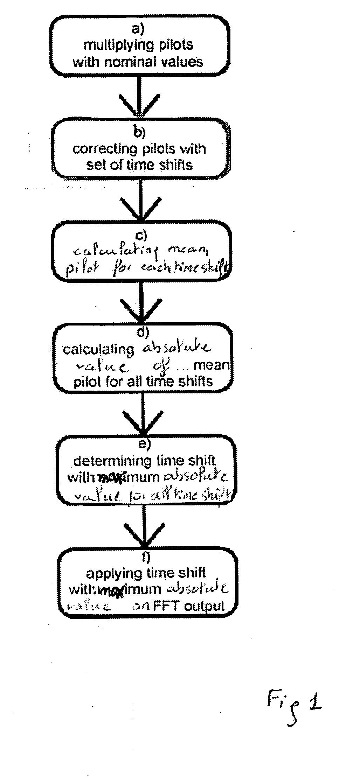

A method according to the invention is executed in the following way (Fig. 1):

First of all, a FFT is performed in order to get the values magnitude and phase of the received sub carriers, i.e. of the pilot sub carriers and the data sub carriers independently from the frequency of the particular sub carrier. The values can be displayed in the complex number plane in a way that the magnitude is displayed as the distance from the origin of the complex number plane and the phase is displayed as the angle versus positive real axis.

After the FFT, in a first step a), the received pilot sub carriers are multiplied with their nominal values '+1' or '-1' in order to bring each of them to a nominal value of '1' by removal of the modulation on the pilot sub carrier applied in the transmitter.

In a second step b) each pilot is corrected with a set of time shifts $\Delta t_{corr}$

In a third step c) a mean pilot $\overline{X}(\Delta t_{corr})$ is determined for each value of time shift by calculating the average magnitude of all received pilot sub carriers corrected with the same time shift and calculating the average phase angle of all received pilot sub carriers corrected with the same time shift. Both, the average magnitude and the average phase angle form the mean pilot for one time shift by representing its position in the complex number plane. All possible time shifts are selected preferably within an expected tolerance that is up to 1/64 of the duration of a time symbol. All those possible time shifts are comprised in a set of different time shifts, wherein the different time shifts differ from each other by constant intervals.

In a fourth step d), for each time shift $\Delta t_{corr}$ the absolute value of the mean pilot $|\overline{x}(\Delta t_{corr})|$ is calculated.

In a fifth step e), the time shift $\Delta t_{est}$ showing the maximum absolute value of the mean pilot is determined.

$$\Delta t_{est} \cong \max\left(\left|\overline{x}(\Delta t_{corr})\right|\right)$$

In a sixth step f), the FFT output of all data and pilot sub carriers is corrected with the time shift corresponding to the maximum absolute value. Alternatively, it is thinkable to shift the FFT window to the appropriate position given by the selected time shift showing the maximum absolute value.

Because in real cases the time shift determined in step d) still can deviate from the optimum time shift by a fraction of the sampling interval, in an alternative additional seventh step g) (not shown), the pilot carriers that are treated according to the second step c) are rotated around the origin to have their mean value on the positive real axis. Thereby the fine correction for the symbol timing is obtained from the slope of the linear regression of the phase angle of these rotated pilots vs. sub carrier frequency. It is also thinkable to use the imaginary part of these pilot carriers vs. frequency.

In an alternative additional eighth step h) (also not shown), the FFT output of all data and pilot sub carriers that is already corrected with the time shift corresponding to the maximum absolute value is again corrected using the fine tuning determined in step g).

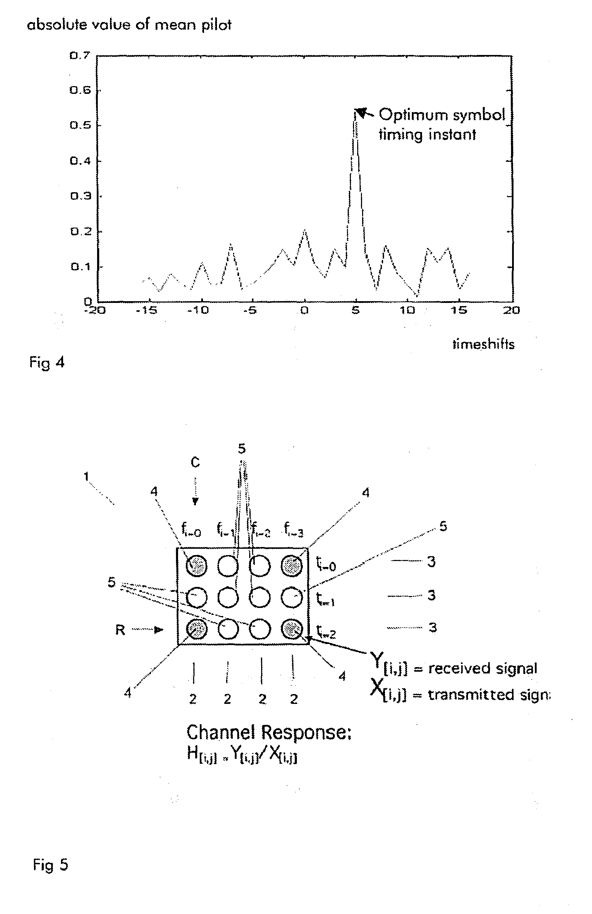

How to determine the time shift showing the maximum absolute value and how to apply this time shift to the data sub carriers best can be understood regarding Fig. 5 showing a tile 1 of a sub-channel. The tile 1 comprises four columns C, each one belonging to sub carriers 2 having the same frequency $f_i$ and three rows R belonging to three succeeding time symbols 3 lying in succeeding time intervals $t_i$. The pilot sub carriers 4 are arranged in the corners of the tile 1. The data sub carriers 5 are arranged between the pilot sub carriers 4.

The values of a received sub carriers differ from the values of the same sub carrier when transmitting it due to attenuation and phase shift, i.e. the values of the sub carriers at the receiver differ from the values the sub carriers had at the transmitter. Since the receiver knows the values $X_{[i,j]}$ of the transmitted pilot sub carriers 4 in advance, it is possible to calculate a channel response $H_{[i,j]}$ taking into account the values $X_{[i,j]}$ of the transmitted pilot sub carriers 4 and the values $Y_{[i,j]}$ of the received pilot sub carriers 4 according to:

$$H_{[i,j]} = Y_{[i,j]} / X_{[i,j]} ,$$

wherein the indices i, j are symbolizing the position of the sub carrier in the tile according to its row R and its column C. The channel response $H_{[i,j]}$ is also called channel estimate. For each different time shift, the channel response $H_{[i,j]}$ of each pilot sub carrier 4 differs.

Regarding the description above, it can be seen that it is also possible to perform a method according to the invention by the following steps:

Calculation of channel estimates for all pilot sub carriers belonging to the same sub-channel.
Correcting the received pilot sub carrier channel estimates with a set of different time shifts.
Calculating a mean corrected pilot channel estimate from all channel estimates of pilot sub carriers belonging to the same sub-channel for each time shift values.
Calculating the absolute value of the corrected mean pilot estimate for each time shift.
Selecting the time shift showing the maximum absolute value.
Applying said time shift showing the maximum absolute value to the received data sub carriers on said sub-channel.

According to the invention, the time shift is chosen showing the maximum absolute value for all pilot sub carrier channel estimates from the mean pilot sub carrier channel estimate. This time shift is applied to all data sub carriers belonging to the same sub-channel, or if more than one sub-channel is assigned to a SS, this time shift is applied to all data sub carriers belonging to the same SS, wherein the mean pilot channel estimate is calculated among all channel estimates of the pilot sub carriers belonging to the same SS.

The detection of the symbol timing according to the invention that is described in the following is based on the definition of terms for the FFT mentioned below:

FFT size $N_{fft}$
(e.g. $N_{fft}$ = 1024)
sampling interval:
sampling_interval = $1/(N_{fft} * N_{oversampling})$
frequency difference between sub carriers:
delta_f = $1/\{N_{fft} * N_{oversampling})$.
time shift between symbol start and FFT start:
delta_t (in units of sampling_interval)
frequency relative to DC sub carrier:
f_subcarr (in units of delta_f)
Each timing shift of delta_t sampling intervals causes a phase rotation of the $n^{th}$ sub carrier signal according to
phase(n) = exp( - i * 2 * pi * delta_t * f_subcarr(n)),
with pi being the Ludolph's Constant 3,14159... and n being the sub carrier index that is defined by the position of the sub carrier in the frequency band.

In the following, the values, i.e. phase and magnitude of the received pilot sub carriers of one SS are considered. When corrected for the time shift, all pilot sub carriers have their nominal values. If the received pilot sub carriers are multiplied with their nominal values, the resulting value of the magnitude of each pilot sub carrier is ideally '1'. If multipath effects are present, the positions of the pilot sub carriers belonging to one SS, multiplied with their nominal value, are located on a curve as shown in Fig. 3, wherein an ideal timing is assumed.

If the locations of pilot carriers are analyzed for different timing shifts, it turns out that the optimum time shift to be applied corresponds with the maximum of the absolute value of the corrected mean pilot. It has been proven by simulation, that the pilots of three sub-channels, i.e. 18 tiles are sufficient to find reliably a unique maximum even at very low signal-to-noise ratios (SNRs) below the operating threshold.

To estimate the optimum symbol timing according to the invention, the procedure is as follows (compare with Fig. 1):

The pilots are multiplied with their nominal values (+1 or -1) in order to bring each of them to a nominal value of 1 (Step a)).

For finding the optimum correction, these normalized pilot sub carriers are corrected for all possible time shifts delta_t within the expected tolerances, e.g. up to 1/64 of the symbol duration, by multiplying with the factors:

$$phase\_corr(n, \, delta\_t) \; = \; exp( \, i * 2 * pi * delta\_t * f\_subcarr(n) \; ) \, ,$$

wherein n is the sub carrier index (Step b)).

For each time shift delta_t, the absolute value of the mean corrected pilot is calculated (Step c and d)) and

The time shift with the maximum absolute value is detected (Step e)).

The time shift with the maximum absolute value is applied to the received data sub carriers either by shifting the FFT window to the appropriate position given by the selected time shift showing the maximum absolute value, or by correcting the FFT output with the selected time shift showing the maximum absolute value.

An example for the absolute value of the mean pilot for different time shifts is given in Fig. 5. showing the absolute value of the pilot sub carriers for different time shifts. Even under very poor conditions where no reasonable data transmission is possible, as assumed in the example shown in Fig. 4, a clear maximum absolute value, indicating the optimal symbol timing instant, is found (strong multi-path channel, SNR = 0dB).

In real cases the time shift still can deviate from the optimum time shift delta_t by a fraction of sampling_interval. In order to correct this the pilot carriers treated according to Step b) have to be rotated around the origin to have their mean value on the positive real axis, wherein a fine correction for the timing is obtained from the slope of the linear regression of the phase angle of these rotated pilots vs. sub carrier frequency. Finally, with the time shift delta_t corresponding to the maximum absolute value and the above fine tuning, the FFT output of all data and pilot sub carriers are corrected.

With the described method according to the invention, the following advantages are achieved:

A symbol timing fine correction of a multi-user OFDMA signal at an OFDMA base station is achieved.

An information for monitoring and tracking the symbol timing and due to this the ranging can be derived directly with high accuracy.

A better usage of already available pilot carrier overhead in the transmitted signal is achieved.

The method according to the invention is independent of a standard, as long as multiple groups of sub carriers are assigned to individual OFDMA subscriber stations.

It is important to mention, that the method according to the invention can also be used in combination with advanced equalization algorithms requiring perfect symbol timing.

It is important to mention that the time symbol of the OFDMA signal usually is enlarged by a CP to compensate multi-path effects in non line of sight conditions. Due to the CP, the demodulation can be performed even in presence of shifts in symbol timing, as long as they are within the length of the CP. In this case, the influence of the timing error is a phase rotation of each sub carrier proportional to its sub carrier index. IEEE 802.16e standard requires an allowed timing tolerance for each SS of 1/2 minimum CP, which means 1/64 of the symbol time duration. Other FFT sizes also are supported by this invention.

**Commercial applicability:**

The invention is commercially applicable particularly in the field of production and operation of networks for wireless communication and data transmission.

List of reference numerals

1    tile, sub carrier group
2    sub carrier
3    time symbol
4    pilot sub carrier
5    data sub carrier

**Claims**

**1.** Method for detecting symbol timing in an OFDMA system, wherein a sub-channel comprises several groups (1) of sub carriers (2) spread over the frequency band, each group (1) of sub carriers (2) comprising at least one pilot sub carrier (4) , said method being **characterized by** the steps of:

- correcting the received pilot sub carriers belonging to the same sub-channel (4) with a set of different time shifts,
- determining a mean pilot from all corrected pilot sub carriers (4) for each time shift,
- calculating the absolute value of said mean pilot for each time shift,

- selecting the time shift showing the maximum absolute value, and
- applying the selected time shift to correct received data sub carriers (5) on said sub-channel.

2. Method for detecting symbol timing in an OFDMA system, wherein a sub-channel comprises several groups (1) of sub carriers (2) spread over the frequency band, each group (1) of sub carriers (2) comprising at least one pilot sub carrier (4), said method being **characterized by** the steps of:

- calculation of channel estimates for all pilot sub carriers (4) belonging to the same sub-channel,
- correcting the received pilot sub carrier channel estimates with a set of different time shifts,
- calculating a mean pilot channel estimate from said corrected pilot sub carrier channel estimates for each time shift,
- calculating the absolute value of said mean pilot channel estimate for each time shift,
- selecting the time shift showing the maximum absolute value, and
- applying said time shift showing the maximum mean value to the received data sub carriers on said sub-channel.

3. Method according to claim 2, **characterized in that** correcting the calculated pilot sub carrier channel estimates with a set of different time shifts, calculating the absolute value of the mean calculated pilot sub carrier channel estimates for each time shift, selecting the time shift showing the maximum absolute value, and applying said time shift to the received data sub carriers (4) is performed per subscriber station instead of per sub-channel.

4. Method according to claim 1, **characterized in that** correcting the received pilot sub carriers (4) with a set of different time shifts, calculating the absolute value of the mean of the corrected pilot sub carriers (4) for each time shift, selecting the time shift showing the maximum absolute value, and applying said time shift to the received data sub carriers (4) is performed per subscriber station instead of per sub-channel.

5. Method according to claim 1 or 4, **characterized in that** the set of different time shifts used to correct the pilot sub carriers (4) lies within an expected tolerance.

6. Method according to one of the previous claims, **characterized in that** first of all a Fast Fourier Transformation (FFT) is performed.

7. Method according to claim 6, **characterized in that** applying said time shift to the received data sub carriers (5) is either done by shifting the FFT window to the appropriate position given by the selected time shift showing the maximum absolute value, or the FFT output is corrected with the selected time shift showing the maximum absolute value.

8. Method according to one of the claims 1 or 4 to 7, **characterized in that** a modulation of the pilot sub carriers (4) is removed before the mean pilot is determined.

9. Method according to one of the previous claims, **characterized in that** a fine correction for the symbol timing is performed in order to correct deviations caused by sample inaccuracy in the order of a fraction of the sampling interval, whereas
the fine correction is obtained from the slope of the linear regression of the phase angles of the pilot sub carriers (4) vs. the sub carrier frequency.

10. Method according to one of the previous claims, **characterized in that** a fine correction for the symbol timing is performed in order to correct deviations caused by sample inaccuracy in the order of a fraction of the sampling interval, further **characterized in that** to fine correct, the pilot sub carriers (4) corrected with the selected time shift are rotated around the origin with the inverse phase angle of the mean pilot in order to have their mean value on the positive real axis before determining the slope of the linear regression of the phase angles vs. the sub carrier frequency.

11. Method according to one of the claims 1 to 9, **characterized in that** a fine correction for the symbol timing is performed in order to correct deviations caused by sample inaccuracy in the order of a fraction of the sampling interval, further **characterized in that** to fine correct, the imaginary part of the pilot sub carriers (4) vs. the sub carrier frequency is used.

**12.** Method according to one of the previous claims, **characterized in that** a fine correction for the symbol timing is performed in order to correct deviations caused by sample inaccuracy in the order of a fraction of the sampling interval, whereas
fine correction takes place by determining and applying said fine correction after determining and applying the time shift showing the maximum absolute value to the received data sub carriers (5).

**13.** Method according to one of the previous claims, **characterized in that** during transmission, the symbol timing is monitored and tracked on the receiver side in order to detect, if the symbol timing exceeds a given tolerance, and in case of exceeding a given tolerance, ranging is adjusted on the transmitter side.

**14.** OFDMA base station to be used to execute the method according to claim 1, **characterized by**

- means to correct the received pilot sub carriers (4) with a set of different time shifts,
- means to determine a mean pilot from all corrected pilot sub carriers (4) for each time shift,
- means to calculate the absolute value of the mean of the corrected pilot sub carriers (4) for each time shift,
- means to select the time shift showing the maximum absolute value, and
- means to apply the selected time shift to received data sub carriers (5) on said sub-channel.

**15.** OFDMA base station according to claim 14, **characterized by**

- means to perform a FFT.

**16.** Computer program product stored on a computer usable medium comprising computer readable program means adapted to perform the method of anyone of the claims 1 to 13, when said computer program product is executed on a computer.


**Patentansprüche**

**1.** Verfahren zum Erkennen des Symboltaktes in einem OFDMA-System, worin ein Subkanal mehrere Gruppen (1) von Subkanälen (2), welche über ein Frequenzband verteilt sind, umfasst, wobei jede Gruppe (1) von Subkanälen (2) mindestens einen Pilotsubträger (4) umfasst, wobei das Verfahren durch die folgenden Schritte **gekennzeichnet** ist:

- Korrigieren der empfangenen Pilotsubträger, welche demselben Subkanal (4) mit einer Reihe von verschiedenen Time-Shifts angehören,
- Ermitteln eines mittleren Piloten unter allen korrigierten Pilotsubträgern (4) für jeden Time-Shift,
- Errechnen des absoluten Wertes des besagten mittleren Piloten für jeden Time-Shift,
- Wählen des Time-Shifts, welcher den maximalen absoluten Wert aufweist, und
- Anwenden des gewählten Time-Shift zum Korrigieren der empfangenen Datensubträger (5) auf dem besagten Subkanal.

**2.** Verfahren zum Erkennen des Symboltaktes in einem OFDMA-System, worin ein Subkanal mehrere Gruppen (1) von Subkanälen (2), welche über ein Frequenzband verteilt sind, umfasst, wobei jede Gruppe (1) von Subkanälen (2) mindestens einen Pilotsubträger (4) umfasst, wobei das Verfahren durch die folgenden Schritte **gekennzeichnet** ist:

- Errechnen von Kanalschätzungen für alle Pilotsubträger (4), welche demselben Subkanal angehören,
- Korrigieren der empfangenen Pilotsubträger-Kanalschätzungen mit einer Reihe von verschiedenen Time-Shifts,
- Errechnen einer mittleren Pilotkanalschätzung aus den besagten korrigierten Pilotsubträger-Kanalschätzungen für jeden Time-Shift,
- Errechnen des absoluten Wertes der besagten mittleren Pilotkanalschätzung für jeden Time-Shift,
- Wählen des Time-Shifts, welcher den maximalen absoluten Wert aufweist, und
- Anwenden des gewählten Time-Shifts, welcher den maximalen Mittelwert aufweist, auf die empfangenen Datensubträger auf dem besagten Subkanal.

**3.** Verfahren nach Anspruch 2, **dadurch gekennzeichnet, dass**

das Korrigieren der errechneten Pilotsubträger-Kanalschätzungen mit einer Reihe von verschiedenen Time-Shifts, das Errechnen des absoluten Wertes der durchschnittlichen errechneten Pilotsubträger-Kanalschätzungen für jeden Time-Shift, das Wählen des Time-Shifts, welcher den maximalen absoluten Wert aufweist, und das Anwenden des besagten Time-Shifts auf die empfangenen Datensubträger (4) pro Subscriber Station anstatt pro Subkanal erfolgt.

4.  Verfahren nach Anspruch 1, **dadurch gekennzeichnet, dass**
    das Korrigieren der empfangenen Pilotsubträger (4) mit einer Reihe von verschiedenen Time-Shifts, das Errechnen des absoluten Wertes des mittleren der korrigierten Pilotsubträger (4) für jeden Time-Shift, das Wählen des Time-Shifts, welcher den maximalen absoluten Wert aufweist, und das Anwenden des besagten Time-Shift auf die empfangenen Datensubträger (4) pro Subscriber Station anstatt pro Subkanal erfolgt.

5.  Verfahren nach Anspruch 1 oder 4, **dadurch gekennzeichnet, dass**
    die zum Korrigieren der Pilotsubträger (4) benutzte Reihe von verschiedenen Time-Shifts innerhalb einer vorgesehenen Toleranz liegt.

6.  Verfahren nach einem der vorstehenden Ansprüche, **dadurch gekennzeichnet, dass** zu allererst eine Fast Fourier-Transformation (FFT) durchgeführt wird.

7.  Verfahren nach Anspruch 6, **dadurch gekennzeichnet, dass**
    das Anwenden des besagten Time-Shifts auf die empfangenen Datensubträger (5) entweder durch Verschieben des FFT-Fensters in die geeignete, von dem gewählten Time-Shift mit dem maximalen absoluten Wert angegebene Position erfolgt, oder dass der FFT-Ausgang mit dem gewählten Time-Shift, welche den maximalen absoluten Wert aufweist, korrigiert wird.

8.  Verfahren nach einem der Ansprüche 1 oder 4 bis 7, **dadurch gekennzeichnet, dass** eine Modulation des Pilotsubträgers (4) herausgenommen wird, bevor der mittlere Pilot ermittelt wird.

9.  Verfahren nach einem der vorstehenden Ansprüche, **dadurch gekennzeichnet, dass** ein Feinkorrigieren für den Symboltakt durchgeführt wird, um die durch Musterungenauigkeit in der Ordnung einer Fraktion des Abtastintervalls verursachten Abweichungen zu korrigieren, wobei
    das Feinkorrigieren aus der Neigung der linearen Regression der Phasenwinkel der Pilotsubträger (4) gegenüber der Subträgerfrequenz erzielt wird.

10. Verfahren nach einem der vorstehenden Ansprüche, **dadurch gekennzeichnet, dass** ein Feinkorrigieren für den Symboltakt durchgeführt wird, um die durch Musterungenauigkeit in der Ordnung einer Fraktion des Abtastintervalls verursachten Abweichungen zu korrigieren, weiterhin **dadurch gekennzeichnet, dass**
    für das Feinkorrigieren die mit dem gewählten Time-Shift korrigierten Pilotsubträger (4) mit dem entgegengesetzten Phasenwinkel um de Ursprung gedreht werden, so dass die mittlere Wert auf der positiven reellen Achse liegt, bevor die Neigung der linearen Regression der Phasenwinkel gegenüber der Subträgerfrequenz ermittelt wird.

11. Verfahren nach einem der Ansprüche 1 bis 9, **dadurch gekennzeichnet, dass** ein Feinkorrigieren für den Symboltakt durchgeführt wird, um die durch Musterungenauigkeit in der Ordnung einer Fraktion des Abtastintervalls verursachten Abweichungen zu korrigieren, weiterhin **dadurch gekennzeichnet, dass**
    zum Feinkorrigieren der imaginäre Teil des Pilotsubträgers (4) gegenüber der Subträgerfrequenz benutzt wird.

12. Verfahren nach einem der vorstehenden Ansprüche, **dadurch gekennzeichnet, dass** ein Feinkorrigieren für den Symboltakt durchgeführt wird, um die durch Musterungenauigkeit in der Ordnung einer Fraktion des Abtastintervalls verursachten Abweichungen zu korrigieren, wobei
    das Feinkorrigieren durch Ermittlung und Anwendung der besagten Feinkorrektur nach der Ermittlung und Anwendung des Time-Shifts, welcher den maximalen absoluten Wert aufweist, auf die empfangenen Datensubträger (5) erfolgt.

13. Verfahren nach einem der vorstehenden Ansprüche, **dadurch gekennzeichnet, dass** der Symboltakt während der Übertragung überwacht und empfängerseitig rückverfolgt wird, um zu erkennen, ob der Symboltakt eine gegebene Toleranz überschreitet, und wenn eine gegebene Toleranz überschritten wird, erfolgt die Anpassung senderseitig.

14. Eine OFDMA-Basisstation, welche eingesetzt wird, um das Verfahren nach Anspruch 1 auszuführen, **gekennzeich-**

**net durch**

- Mittel zum Korrigieren der empfangenen Pilotsubträger (4) mit einer Reihe von verschiedenen Time-Shifts,
- Mittel zum Bestimmen eines mittleren Piloten unter allen korrigierten Pilotsubträgern (4) für jeden Time-Shift,
- Mittel zum Errechnen des absoluten Wertes des besagten mittleren der korrigierten Pilotsubträger (4) für jeden Time-Shift,
- Mittel zum Wählen des Time-Shifts, welcher den maximalen absoluten Wert aufweist, und
- Mittel zum Anwenden des gewählten Time-Shifts auf die empfangenen Datensubträger (5) auf dem besagten Subkanal.

15. Eine OFDMA-Basisstation nach Anspruch 14, **gekennzeichnet durch**

- Mittel zum Durchführen einer FFT.

16. Ein auf einem computerfähigen Medium gespeichertes Computerprogramm-Produkt, welches computerlesbare Programm-Mittel zum Ausführen des Verfahrens nach einem beliebigen der Ansprüche 1 bis 13, wenn das besagte Computerprogramm-Produkt auf einem Computer ausgeführt wird, umfasst.

**Revendications**

1. Procédé de détection du rythme des symboles dans un système OFDMA, dans lequel une voie intermédiaire comprend plusieurs groupes (1) de sous-porteuses (2) réparties sur la bande de fréquences, chaque groupe (1) de sous-porteuses (2) comprenant au moins une sous-porteuse témoin (4), ledit procédé étant **caractérisé par** les étapes suivantes :

- correction des sous-porteuses témoins reçues appartenant à la même voie intermédiaire (4) au moyen d'un jeu de décalages différents,
- détermination d'un témoin moyen parmi toutes les sous-porteuses témoins corrigées (4) pour chaque décalage,
- calcul de la valeur absolue dudit témoin moyen pour chaque décalage,
- sélection du décalage affichant la valeur absolue maximale, et
- application du décalage sélectionné pour corriger les sous-porteuses de données reçues (5) sur ladite voie intermédiaire.

2. Procédé de détection du rythme des symboles dans un système OFDMA, dans lequel une voie intermédiaire comprend plusieurs groupes (1) de sous-porteuses (2) réparties sur la bande de fréquences, chaque groupe (1) de sous-porteuses (2) comprenant au moins une sous-porteuse témoin (4), ledit procédé étant **caractérisé par** les étapes suivantes :

- calcul d'estimations de voie pour toutes les sous-porteuses témoins (4) appartenant à la même voie intermédiaire,
- correction des estimations de vole de sous-porteuse témoin reçues au moyen d'un jeu de décalages différents,
- calcul d'une estimation de voie témoin moyenne à partir desdites estimations de voie de sous-porteuse témoin corrigées pour chaque décalage,
- calcul de la valeur absolue de chaque estimation de voie témoin moyenne pour chaque décalage,
- sélection du décalage affichant la valeur absolue maximale, et
- application dudit décalage affichant la valeur moyenne maximale aux sous-porteuses de données reçues sur ladite voie intermédiaire.

3. Procédé selon la revendication 2, **caractérisé en ce que**
la correction des estimations de vole de sous-porteuse témoin calculées au moyen d'un jeu de décalages différents, le calcul de la valeur absolue des estimations de voie de sous-porteuse témoin moyennes calculées pour chaque décalage, la sélection du décalage affichant la valeur absolue maximale et l'application dudit décalage aux sous-porteuses de données reçues (4) sont exécutées par station d'abonné plutôt que par voie intermédiaire.

4. Procédé selon la revendication 1, **caractérisé en ce que**
la correction des sous-porteuses témoins reçues (4) au moyen d'un jeu de décalages différents, le calcul de la valeur absolue de la moyenne des sous-porteuses témoins corrigées (4) pour chaque décalage, la sélection du décalage affichant la valeur absolue maximale et l'application dudit décalage aux sous-porteuses de données reçues (4) sont exécutées par station d'abonné plutôt que par voie intermédiaire.

**5.** Procédé selon la revendication 1 ou 4, **caractérisé en ce que**
le jeu de décalages différents utilisés pour corriger les sous-porteuses témoins (4) se trouve à l'intérieur d'une tolérance prévue.

**6.** Procédé selon l'une des revendications précédentes, **caractérisé en ce que** en premier lieu, une transformation de Fourier rapide (FFT) est effectuée.

**7.** Procédé selon la revendication 6, **caractérisé en ce que**
l'application dudit décalage aux sous-porteuses de données reçues (5), soit est faite en décalant la fenêtre FFT dans la position appropriée donnée par le décalage sélectionné qui affiche la valeur absolue maximale, soit la sortie FFT est corrigée avec le décalage sélectionné qui affiche la valeur absolue maximale.

**8.** Procédé selon l'une des revendications 1 ou 4 à 7, **caractérisé en ce qu'**une modulation des sous-porteuses témoins (4) est supprimée avant la détermination du témoin moyen.

**9.** Procédé selon l'une des revendications précédentes, **caractérisé en ce qu'**une correction fine pour le rythme des symboles est réalisée afin de corriger les déviations provoquées par une imprécision des échantillons de l'ordre d'une fraction de l'intervalle d'échantillonnage, dans lequel
la correction fine est obtenue à partir de la pente de la régression linéaire des angles de phase des sous-porteuses témoins (4) par rapport à la fréquence de sous-porteuse.

**10.** Procédé selon l'une des revendications précédentes, **caractérisé en ce qu'**une correction fine pour le rythme des symboles est réalisée afin de corriger les déviations provoquées par une imprécision des échantillons de l'ordre d'une fraction de l'intervalle d'échantillonnage, **caractérisé en outre en ce que**
pour la correction fine, les sous-porteuses témoins (4) corrigées au moyen du décalage sélectionné sont tournées autour de la sous-porteuse d'origine selon l'angle de phase inverse du témoin moyen afin que leur valeur moyenne soit sur l'axe réel positif avant de déterminer la pente de la régression linéaire des angles de phase par rapport à la fréquence de sous-porteuse.

**11.** Procédé selon l'une des revendications 1 à 9, **caractérisé en ce qu'**une correction fine pour le rythme des symboles est réalisée afin de corriger les déviations provoquées par une imprécision des échantillons de l'ordre d'une fraction de l'intervalle d'échantillonnage, **caractérisé en outre en ce que**
pour la correction fine, la partie imaginaire des sous-porteuses témoins (4) par rapport à la fréquence de sous-porteuse est utilisée.

**12.** Procédé selon l'une des revendications précédentes, **caractérisé en ce qu'**une correction fine pour le rythme des symboles est réalisée afin de corriger les déviations provoquées par une imprécision des échantillons de l'ordre d'une fraction de l'intervalle d'échantillonnage, dans lequel
la correction fine se fait en déterminant et en appliquant ladite correction fine après avoir déterminé et appliqué le décalage qui affiche la valeur absolue maximale aux sous-porteuses de données reçues (5).

**13.** Procédé selon l'une des revendications précédentes, **caractérisé en ce que,** pendant la transmission, le rythme des symboles est surveillé et suivi sur le côté récepteur afin de détecter si le rythme des symboles dépasse une tolérance donnée, et s'il dépasse une tolérance donnée, le classement est réglé sur le côté émetteur.

**14.** Station de base OFDMA destinée à être utilisée pour exécuter le procédé selon la revendication 1, **caractérisée par**

- des moyens de correction des sous-porteuses témoins reçues (4) au moyen d'un jeu de décalages différents,
- des moyens de détermination d'un témoin moyen parmi toutes les sous-porteuses témoins corrigées (4) pour chaque décalage,
- des moyens de calcul de la valeur absolue de la moyenne des sous-porteuses témoins corrigées pour chaque décalage,
- des moyens de sélection du décalage affichant la valeur absolue maximale, et
- des moyens d'application du décalage sélectionné aux sous-porteuses de données reçues (5) sur ladite voie intermédiaire.

**15.** Station de base OFDMA selon la revendication 14, **caractérisée par**

    - des moyens d'exécution d'une FFT.

**16.** Produit programme informatique stocké sur un support lislble par ordinateur comprenant un programme lisible par ordinateur adapté pour exécuter le procédé selon l'une quelconque des revendications 1 à 13, lorsque ledit produit programme informatique est exécuté sur un ordinateur.

a)
multiplying pilots
with nominal values

b)
correcting pilots with
set of time shifts

c)
calculating mean
pilot for each time shift

d)
calculating absolute
value of ... mean
pilot for all time shifts

e)
determining time shift
with maximum absolute
value for all time shift

f)
applying time shift
with maximum absolute
value on FFT output

Fig 1

Fig 2

| no corruption of pilots, mean equals all pilots | timeshift of one sampling-interval |

Fig 3

absolute value of mean pilot

Fig 4

Channel Response:
$H_{[i,j]} = Y_{[i,j]}/X_{[i,j]}$

$Y_{[i,j]}$ = received signal
$X_{[i,j]}$ = transmitted sign:

Fig 5

## REFERENCES CITED IN THE DESCRIPTION

**Patent documents cited in the description**

- EP 1267535 A1

**Non-patent literature cited in the description**

- **BOOGUO YANG et al.** Timing Recovery for OFDM Transmission. *IEEE Journal on Selected Areas in Communications,* November 2000, vol. 18 (11

- **LEE, D. et al.** A New Symbol Timing Recovery Algorithm for OFDM Systems. *IEEE Transactions on Consumer Electronics,* August 1997, vol. 43 (3